# EUROPEAN PATENT SPECIFICATION

(11) **EP 3 460 395 B1**
(45) Date of publication and mention of the grant of the patent: **21.05.2025**
(21) Application number: 18188264.8
(22) Date of filing: 09.08.2018
(51) Int. Cl.: G01C 15/00

(54) **MOVING OBJECT AND APPARATUS FOR RECOGNIZING ARTIFICIAL LANDMARKS COMPRISING INVISIBLE BARCODES**
BEWEGLICHES OBJEKT UND VORRICHTUNG ZUR ERKENNUNG KÜNSTLICHER LANDMARKEN MIT UNSICHTBAREN BARCODES
OBJET MOBILE ET APPAREIL DE RECONNAISSANCE DE REPÈRES ARTIFICIELS COMPRENANT DES CODES-BARRES INVISIBLES

(30) Priority: 21.08.2017 KR 20170105671; 02.11.2017 KR 20170145577; 29.09.2017 KR 20170126788
(43) Date of publication of application: 27.03.2019
(73) Proprietor: Yujin Robot Co., Ltd., Incheon 22013 (KR)
(72) Inventor: SHIN, Kyung Chul, 03010 Seoul (KR); PARK, Seong Ju, 15820 Gyeonggi-do (KR); LEE, Jae Young, 15804 Gyeonggi-do (KR); CHEON, Moo Woong, 13903 Gyeonggi-do (KR)
(74) Representative: Pace Napoleone, Maria

(56) References cited:
- WO-A1-2007/025240
- US-A1- 2014 111 812
- US-A1- 2017 046 548
- JINWOOK HUH ET AL: "Mobile Robot Exploration in Indoor Environment Using Topological Structure with Invisible Barcode", 2006 IEEE/RSJ INTERNATIONAL CONFERENCE ON INTELLIGENT ROBOTS AND SYSTEMS, 1 October 2006 (2006-10-01), pages 5265 - 5272, XP055558400, ISBN: 978-1-4244-0259-5, DOI: 10.1109/IROS.2006.282025
- WIKIPEDIA: "Barcode", 17 August 2017 (2017-08-17), XP055833706, Retrieved from the Internet <URL:https://en.wikipedia.org/w/index.php?title=Barcode&oldid=795974695> [retrieved on 20210820]

## Description

### TECHNICAL FIELD

The present disclosure relates an apparatus which recognizes an artificial landmark, an artificial landmark, and a moving object including an apparatus which recognizes an artificial landmark.

### BACKGROUND ART

The contents described in this section merely provide background information on the present exemplary embodiment but do not constitute the related art.

In order to identify a location of a moving object or other object, the moving object which moves in a space uses a landmark. A landmark is classified into a natural landmark and an artificial landmark. According to a method using a natural landmark, a specific component is extracted from a structure, a ceiling, a boundary of a wall located in a space and according to a method using an artificial landmark, a pattern or a tag having a specific meaning is attached to a space or an object to recognize the artificial landmark by a camera.

Differently from the natural landmark, the artificial landmark has lots of problems. The artificial landmark induces repulsion from an aesthetic point of view of a general user. Due to direct reflection of light and a large error in a dark environment or in a long distance, in order to increase a recognition rate of the artificial landmark, the artificial landmark needs to be manufactured to have a predetermined size or larger. Due to a shape which does not harmonize with the space, a location to which the artificial landmark is attachable is limited in a space which emphasizes an exterior appearance. The producer needs to use a separate camera to recognize an artificial landmark.
"Mobile Robot Exploration in Indoor Environment Using Topological Structure with Invisible Barcode" of Jinwook Huh et al. describes a method for the localization and navigation of a mobile robot using invisible two dimensional barcodes on the floor.
WO 2007/025240 A1 describes a media control unit providing an interactive method using audiovisual content of a DVD played by a multimedia player.
US 2017/046548 A1 describes a method for printing and extracting of a barcode for an object including dividing a barcode into disjointed regions and assigning the disjointed regions to different locations on an object. The disjointed regions are printed on the object at the different locations wherein the disjointed regions are printed visibly or invisibly.
US 2014/111812 A1 describes a 3D laser scanning system and a method of obtaining a 3D image by using the system that detects, with a linear array type photo detector, a reflected light reflected from a target after rotation-emitting a line-shaped pulsed laser light through 360 degrees and obtain a 3D image through point cloud data obtained by measuring a distance to the target.

### SUMMARY OF THE INVENTION

An object to be achieved by the present disclosure is to provide an artificial landmark which is not visible through naked eyes of a user but is recognized by an artificial landmark recognizing apparatus and a Lidar system which recognizes the artificial landmark by analyzing points scanned during a process of scanning the surroundings without providing a separate camera for recognizing the artificial landmark.

Other and further objects of the present disclosure which are not specifically described can be further considered within the scope easily deduced from the following detailed description and the effect.

According to an aspect of the present disclosure, an artificial landmark recognizing apparatus according to claim 1 is provided.

According to another aspect of the present disclosure, a moving object according to claim 5 is provided.

The artificial landmark recognizing apparatus may further include a location calculating unit which calculates a relative location of the artificial landmark from the artificial landmark recognizing apparatus.

The location calculating unit may line-fit the points of the artificial landmark.

The location calculating unit may calculate a relative angle between (i) a line virtually extending between the line-fitted points and the artificial landmark recognizing apparatus and (ii) a line virtually extending in a traveling direction of the artificial landmark recognizing apparatus.

The location calculating unit may calculate a relative distance between the line-fitted points and the artificial landmark recognizing apparatus and calculate a relative location based on the relative angle and the relative distance.

In the artificial landmark, the first wavelength band may be an infrared wavelength band and the second wavelength band may be a visible ray wavelength band.

The code sequence may have a plurality of bright areas and dark areas based on a difference in a reflectance, an absorbance, or an emission rate for light having the first wavelength band.

The code sequence may be a one-dimensional sequence represented by a start pattern, an information pattern, a stop pattern, an error correction pattern, or a combination thereof using (i) a number of bright areas or a width thereof, (ii) a number of dark areas or a width thereof, or (iii) a combination thereof.

The bright area and the dark area of the code sequence may be distinguished by a reflection wavelength, an absorption wavelength, an emission wavelength, a reflectance, an absorbance, an emission rate, a reflecting angle, a color, a surface property of the light having the first wavelength band, or a combination thereof.

The code sequence or the base may include a material which reflects, absorbs, or emits light having the second wavelength band.

Th artificial landmark may further include a cover which is located on a transmitting path of the light having the first wavelength band and includes a material which reflects, absorbs, or emits light having the second wavelength band.

Th artificial landmark may further include an adhesive unit having an adhesive layer formed on a rear surface of the base.

According to the present disclosure, an artificial landmark which is not visible through naked eyes of a user is recognized by an apparatus for recognizing an artificial landmark and a Lidar system recognizes the artificial landmark by analyzing points scanned during a process of scanning the surroundings without providing a separate camera for recognizing the artificial landmark.

Even if the effects are not explicitly mentioned here, the effects described in the following specification which are expected by the technical features of the present disclosure and their potential effects are handled as described in the specification of the present disclosure.

### BRIEF DESCRIPTION OF THE DRAWINGS

FIG. 1 is a block diagram of a moving object according to an exemplary embodiment of the present disclosure;
FIGS. 2 to 3 are views illustrating a moving object according to exemplary embodiments of the present disclosure;
FIG. 4 is a block diagram illustrating an artificial landmark recognizing apparatus according to another exemplary embodiments;
FIGS. 5, 6A to 6D are views illustrating an artificial landmark according to another exemplary embodiments;
FIG. 7 is a flowchart illustrating an operation of an artificial landmark recognizing apparatus according to another exemplary embodiment of the present disclosure which recognizes an artificial landmark;
FIGS. 8A and 8B are views illustrating a shape that the artificial landmark according to another exemplary embodiment of the present disclosure is attached;
FIG. 9 is a flowchart illustrating an operation of an artificial landmark recognizing apparatus according to another exemplary embodiment of the present disclosure which calculates a relative location;
FIG. 10 is a flowchart illustrating an operation of an artificial landmark recognizing apparatus according to another exemplary embodiment of the present disclosure which calculates a relative location through an artificial landmark; and
FIG. 11 is a flowchart illustrating an artificial landmark recognizing method according to another exemplary embodiment of the present disclosure.

### DETAILED DESCRIPTION OF THE EMBODIMENT

Hereinafter, in the description of the present disclosure, a detailed description of the related known functions will be omitted if it is determined that the gist of the present disclosure may be unnecessarily blurred as it is obvious to those skilled in the art and some exemplary embodiments of the present disclosure will be described in detail with reference to exemplary drawings.

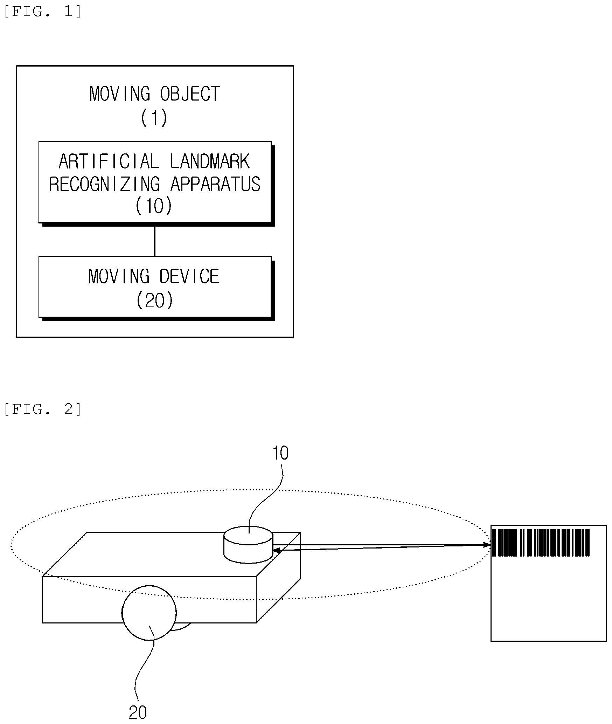

FIG. 1 is a block diagram of a moving object according to an exemplary embodiment of the present disclosure.

As illustrated in FIG. 1, a moving object 1 includes a distance measuring apparatus 10 and a moving device 20. The moving object 1 may omit some components among various components which are exemplarily illustrated in FIG. 1 or may further include other component. For example, the moving object may further include a cleaning unit.

The moving object 1 refers to a device designed to be movable from a specific location to another location according to a predetermined method and moves from the specific location to another location using a moving unit such as wheels, rails, or walking legs. The moving object 1 may collect external information using a sensor and then move according to the collected information or move using a separate manipulating unit by a user.

Examples of the moving object 1 include robot cleaners, toy cars, mobile robots for industrial or military purposes. The moving object 1 may travel using wheels or walk using one or more legs, or may be implemented by a combination thereof.

The robot cleaner is a device which sucks foreign matters such as dust accumulated on a floor while traveling a cleaning space to automatically clean the cleaning space. Differently from a normal cleaner which moves by an external force provided by a user, the robot cleaner moves using external information or a predetermined moving pattern to clean the cleaning space.

The robot cleaner may automatically move using a predetermined pattern or detect an external obstacle using a detecting sensor and then move as it is detected. Further, the robot cleaner may move in accordance with a signal transmitted from a remote control device which is manipulated by the user.

The detecting sensor may be implemented by LIDAR. The LIDAR is a device which transmits a laser signal, measures a returning time of the reflected signal, and measures a distance to a reflector using a speed of light. The laser signal is converted into an electrical signal by a photo diode. The laser signal may have a predetermined wavelength band.

FIGS. 2 to 3 are views illustrating a moving object according to exemplary embodiments of the present disclosure.

Referring to FIG. 2, even though the artificial landmark recognizing apparatus 10 which emits light to a target and receives the light to recognize the artificial landmark is located at an upper edge of the main body, it is merely illustrative and the present disclosure is not limited thereto. Further, one or more artificial landmark recognizing apparatuses may be implemented in an appropriate location in accordance with a design to be implemented.

The artificial landmark recognizing apparatus 10 analyzes points scanned during the process of scanning the surroundings by the moving object to recognize an artificial landmark which is not visible by naked eyes of the user.

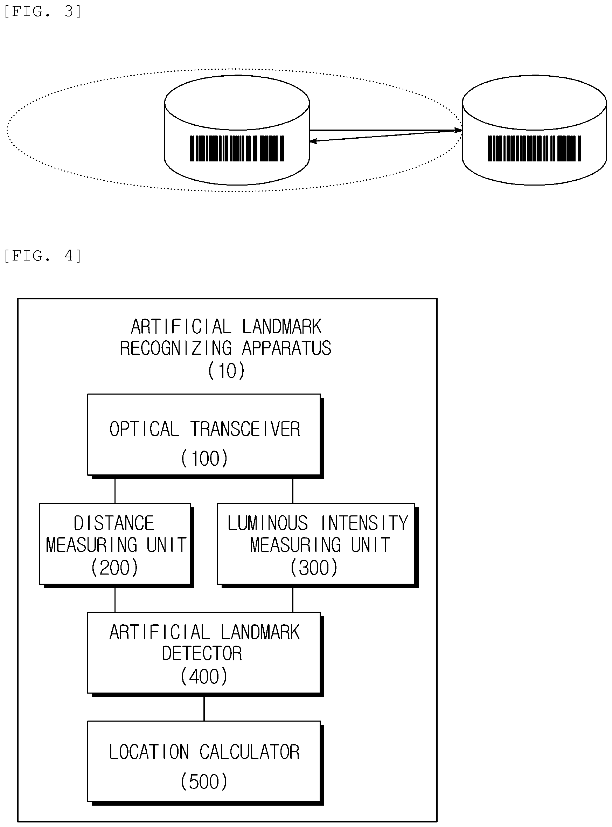

The artificial landmark recognizing apparatus 10 recognizes an artificial landmark attached to a structure such as a door or a lower end of an elevator to calculate a relative location of the structure or its own location. The artificial landmark recognizing apparatus 10 searches an artificial landmark attached to a docking station and the moving object 1 calculates a location and a path to move to the docking station. The artificial landmark recognizing apparatus 10 recognizes the artificial landmark attached to objects by types and a robot including the artificial landmark recognizing apparatus 10 may perform a predetermined operation by distinguishing the objects only by the artificial landmark. As illustrated in FIG. 3, when the artificial landmark is attached to a multi-robot, the artificial landmark recognizing apparatus included in the multi-robot may recognize each other.

The moving device 20 calculates a driving path based on a distance to the target or detects an obstacle to move the moving object. The moving device 20 may move the moving object based on a relative location of an artificial mark. The moving device 20 may be implemented by a moving unit such as wheels, rails, or walking legs.

Hereinafter, a moving landmark recognizing apparatus which is implemented in a moving object or independently operates will be described.

FIG. 4 is a block diagram illustrating an artificial landmark recognizing apparatus.

As illustrated in FIG. 4, the artificial landmark recognizing apparatus 10 includes an optical transceiver 100, a distance measuring unit 200, a luminous intensity measuring unit 300, and an artificial landmark detector 400. The artificial landmark recognizing apparatus 10 may omit some components among various components which are exemplarily illustrated in FIG. 4 or may further include other component. For example, the artificial landmark recognizing apparatus 10 may further include a location calculator 500.

The artificial landmark recognizing apparatus 10 does not include a separate camera for recognizing the artificial landmark but recognizes the artificial landmark which is not visible by naked eyes of the user by analyzing points obtained by scanning the target.

The optical transceiver 100 emits light to a target and receives light which is reflected from the target to convert the light into an electrical signal. The optical transceiver may include a light source, a transmission optical unit, a reception optical unit, and a photodiode. A principle that when light having a photon energy strikes a diode, moving electrons and positive charge holes are generated so that electrons move may be applied to the photo diode. The photo diode may be implemented by a PN junction photo diode, a PIN photo diode, or an avalanche photo diode (APD).

The distance measuring unit 200 measures a distance between points of the target using a time difference between a time when light is emitted and a time when the light is received. The distance measuring unit 200 may include a signal discriminator, a signal detecting unit, and a time to digital converter. The signal discriminator exactly measures a target timing for the input signal to output the electrical signal. The signal detecting unit detects at least one timing having a predetermined reference magnitude from the input signal with an adjusted magnitude to generate an output signal. The time to digital converter generates a digital code corresponding to the time difference between two input signals.

The distance measuring unit 200 may operate by a time of flight (TOF) manner. According to the time of flight manner, a laser emits a pulsed or square wave signal to measure a time when reflection pulses or square wave signals from objects within a measurement range reach a receiver to measure a distance from an object to be measured.

The luminous intensity measuring unit 300 measures a luminous intensity of light reflected from the points of the target. The luminous intensity measuring unit 300 may measure a strength of the electrical signal received from the optical transceiver 100.

The artificial landmark detecting unit 400 determines whether the target is an artificial landmark by analyzing (i) a distance from the points of the target and (ii) a change in a luminous intensity of the points of the target and generates a digital code by analyzing an invisible barcode included in the artificial landmark.

The artificial landmark which is recognized by the artificial landmark detecting unit 400 includes a base and an invisible barcode. The invisible barcode includes a code sequence which is formed of a material which reflects, absorbs, or emits light having a first wavelength band. The code sequence is hidden by a material which reflects, absorbs, or emits light having a second wavelength band and becomes invisible.

The location calculator 500 calculates a relative location between the artificial landmark recognizing apparatus and the artificial landmark.

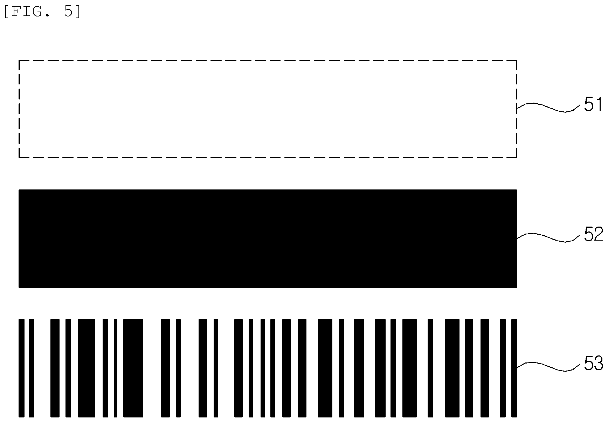

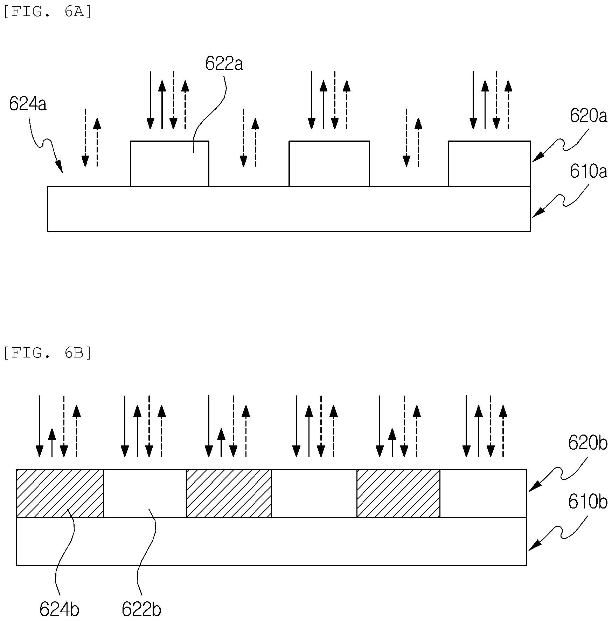

Hereinafter, an artificial landmark will be described with reference to FIGS. 5 and FIGS. 6A to 6D.

In FIG. 5, a white artificial landmark 51 as an observation result with naked eyes, a black artificial landmark 52 as an observation result with naked eyes, and an artificial landmark 53 having discontinuous stripes identified by the artificial landmark detecting unit 140 are illustrated. When the white artificial landmark 51 is attached to a structure or a space having a white background or the black artificial landmark 52 is attached to a structure or a space having a black background, the user may not recognize the artificial landmarks 51 and 52. In contrast, the artificial landmark detecting unit 400 which receives light having a specific wavelength band may distinguish the stripes of the artificial landmark 53.

Referring to FIGS. 6A to 6D, the artificial landmarks 51, 52, and 53 include bases 610a, 610b, 610c, and 610d and invisible barcodes 620a, 620b, 620c, and 620d. The artificial landmarks 51, 52, and 53 may further include covers 630c and 630d, adhesive units, or a combination thereof.

The invisible barcode is connected to a base and includes a code sequence which is formed of a material which reflects, absorbs, or emits light having a first wavelength band. The code sequence is hidden by a material which reflects, absorbs, or emits light having a second wavelength band and becomes invisible. The first wavelength bane is an infrared wavelength band and the second wavelength bane may be a visible ray wavelength band, but these are merely examples. The present disclosure is not limited thereto and appropriate wavelength band may be used depending on the design.

The code sequence has bright areas 622a, 622b, 622c, and 622d and dark areas 624a, 624b, 624c, and 624d based on reflectance, absorbance, or emission rate of light having a first wavelength band.

The code sequence may be a one-dimensional sequence represented by a start patter, an information pattern, a stop pattern, an error correction pattern, or a combination thereof using (i) a number of bright areas or a width thereof, (ii) a number of dark areas or a width thereof, or (iii) a combination thereof.

The bright area and the dark area of the code sequence may be distinguished by a reflection wavelength, an absorption wavelength, an emission wavelength, a reflectance, an absorbance, an emission rate, a reflecting angle, a color, a surface property of the light having the first wavelength band, or a combination thereof.

The code sequence may become invisible by a reflection wavelength, an absorption wavelength, an emission wavelength, a reflectance, an absorbance, an emission rate, a reflecting angle, a color, a surface property of the light having the second wavelength band, or a combination thereof.

Referring to FIG. 6A, the base may include a material which reflects, absorbs, or emits light having a second wavelength band. For example, a code sequence may be formed by patterning a white paper with an omnidirectional reflective material or a pigment.

Referring to FIG. 6B, the code sequence may include a material which reflects, absorbs, or emits light having a second wavelength band. For example, materials or pigments having different reflectance are patterned to form a code sequence.

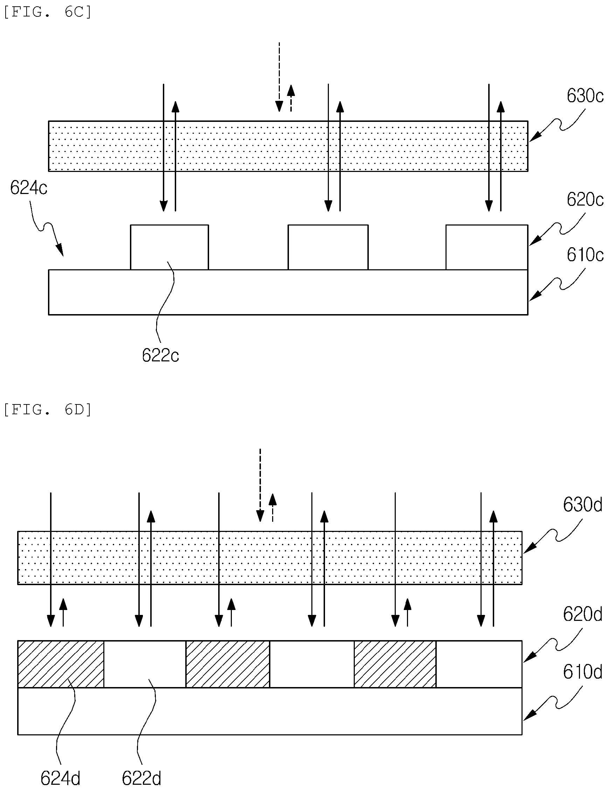

Referring to FIGS. 6C and 6D, the covers 630c and 630d are located on a transmission path of the light having a first wavelength band. The covers 630c and 630d include a material which reflects, absorbs, or emits light having the second wave band. The covers 630c and 630d may filter a specific wavelength band. For example, an infrared ray filter may be used. The infrared filter has a dark red, so that the user may simply recognize the filter as a device having block color, rather than stripes.

The artificial landmark may further include an adhesive unit having an adhesive layer formed on a rear surface of the base.

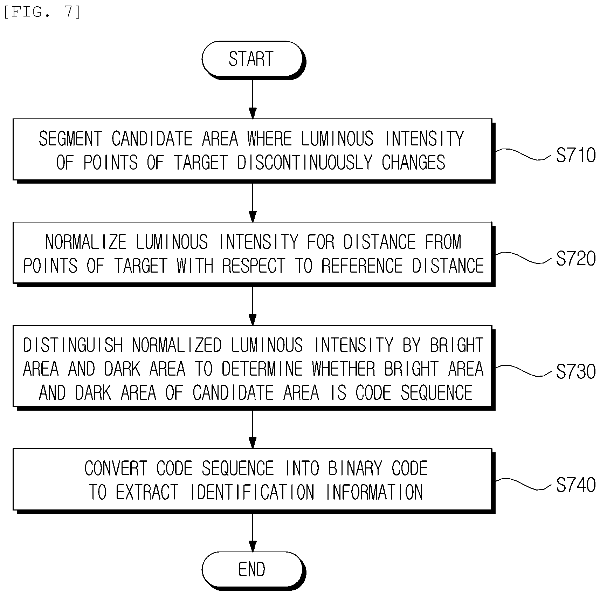

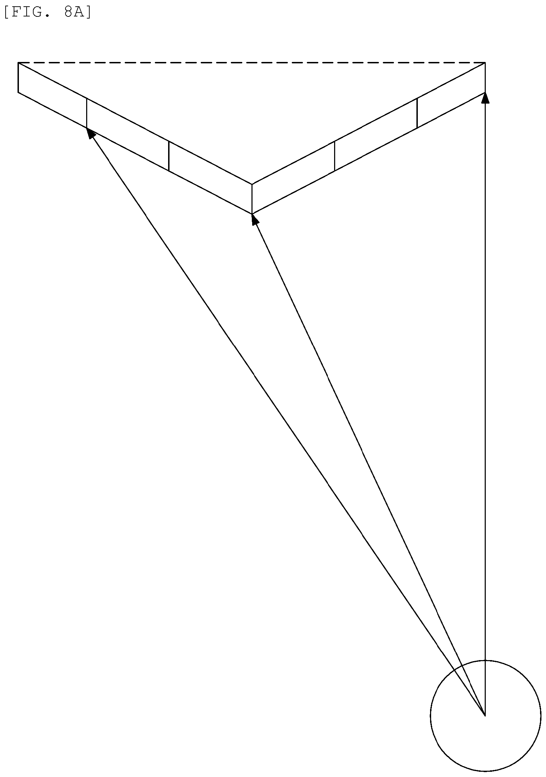

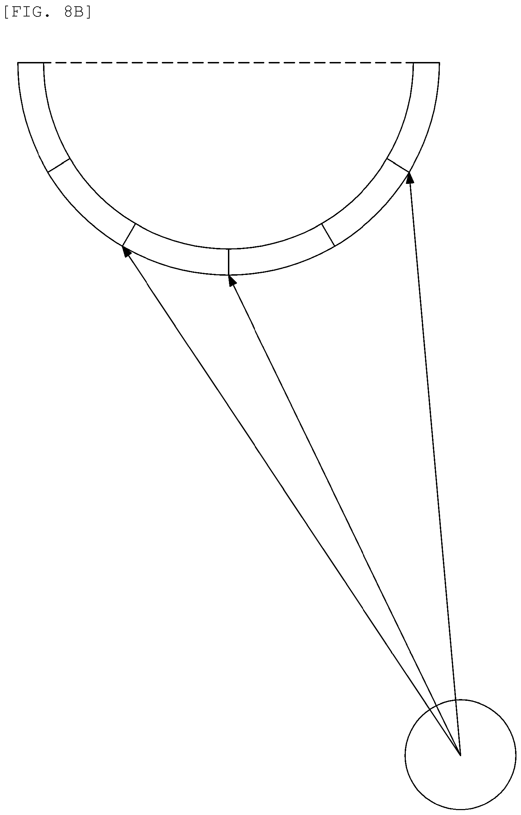

Hereinafter, an operation of the artificial landmark recognizing apparatus which recognizes an artificial landmark will be described with reference to FIGS. 7, 8A, and 8B.

In step S710, the artificial landmark detecting unit segments a candidate area where the luminous intensity of points of the target discontinuously changes. The discontinuous portion means that distance from the points of the target is within a predetermined range, a variation of the luminous intensity of the points exceeds a predetermined range, some of the luminous intensities of the points is smaller than a minimum value and others are larger than a maximum value, and the others are repeated to be smaller than the minimum value and larger than the maximum value. For example, the candidate area has an area similar to the strip of the artificial landmark 53.

In step S720, the artificial landmark detecting unit normalizes a luminous intensity for the distance from the points of the target with respect to a predetermined reference distance. For example, the luminous intensity is normalized with respect to x meters and an appropriate numerical value may be used for the reference distance depending on a design to be implemented.

In step S730, the artificial landmark detecting unit distinguishes the normalized luminous intensity by a bright area and a dark area to determine whether the bright area and the dark area of the candidate area is a code sequence. The artificial landmark detecting unit may distinguish the bright area and the dark area using a moving average method which continuously calculates an average of two or more continuous data. The artificial landmark detecting unit may determine a relative size with the surroundings using local data.

In step S730, as a criteria for the artificial landmark detecting unit to determine whether it is a code sequence, an appropriate criteria for determination may be applied depending on a design to be implemented. For example, the artificial landmark detecting unit may determine similarity based on (i) an interval between a first dark area and a second dark area, (ii) an interval between the last dark area and the second dark area to the last, (iii) a percentage or a probability that a segmented portion is on a plane, or (iv) a combination thereof. FIG. 8A illustrates an artificial landmark attached onto a surface which is folded at a predetermined angle and FIG. 8B illustrates an artificial landmark which is attached onto a curved surface. The distance values vary at every point so that the moving object may be docked with respect to a vertex or exactly approaches a target location. When the artificial landmark is attached onto one or more planes, false positive or type I error may be minimized.

In step S740, the artificial landmark detecting unit converts the code sequence into a binary code to extract identification information. As a criteria for the artificial landmark detecting unit to convert the code sequence into the binary code, an appropriate converting criteria may be applied depending on a design to be implemented. For example, the artificial landmark detecting unit reads a luminous intensity in a horizontal direction at every predetermined interval with respect to a center and generates a binary code such that when the luminous intensity is larger than a threshold value, the binary code is set to be 1 and when the luminous intensity is smaller than the threshold value, the binary code is set to be 0.

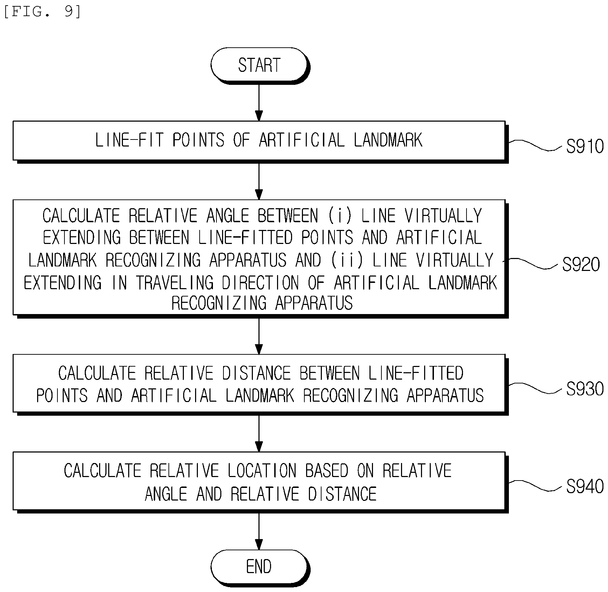

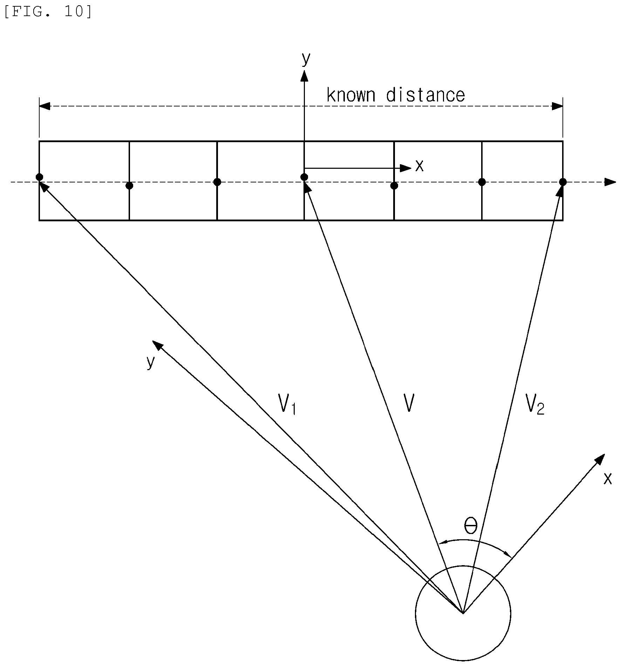

Hereinafter, an operation of the artificial landmark recognizing apparatus of calculating a relative location will be described with reference to FIGS. 9 and 10. The artificial landmark recognizing apparatus identifies a location of the artificial landmark using posture information and distance information.

In step S910, a location calculator performs line fitting on points of the recognized artificial landmark in one direction. The location calculator may calculate a linear equation through the line fitting. The line fitted points are corrected and the angle may be corrected with respect to a horizontal line or a vertical line. The location calculator may correct the location of the points of the artificial landmark through pattern matching.

In step S920, the location calculator calculates a relative angle between (i) a line virtually extending between line fitted points and the artificial landmark recognizing apparatus and (ii) a line virtually extending in a traveling direction of the artificial landmark recognizing apparatus. The location calculator calculates a relative angle by comparing an angle of the rotating optical transceiver. In FIG. 10, a relative angle θ is illustrated.

In step S930, the location calculator calculates a relative distance between the line fitted points and the artificial landmark recognizing apparatus. In FIG. 10, relative vectors V, V₁, and V₂ are illustrated.

In step S940, the location calculator calculates a relative location based on a relative angle and a relative distance. For example, the distance may be calculated using a trigonometric function.

Even though components included in the artificial landmark recognizing apparatus are separately illustrated in FIG. 4, the plurality of components are coupled to each other to be implemented by at least one module. The components are connected to a communication path which connects a software module or a hardware module in the apparatus to organically operate between the components. The components communicate with each other using one or more communication buses or signal lines.

The artificial landmark recognizing apparatus may be implemented in a logic circuit by hardware, firm ware, software, or a combination thereof or may be implemented using a general purpose or special purpose computer. The apparatus may be implemented using hardwired device, field programmable gate ware (FPFA) or application specific integrated circuit (ASIC). Further, the apparatus may be implemented by a system on chip (SoC) including one or more processors and a controller.

The artificial landmark recognizing apparatus may be mounted in a computing device provided with a hardware element as a software, a hardware, or a combination thereof. The computing device may refer to various devices including all or some of a communication device for communicating with various devices and wired/wireless communication networks such as a communication modem, a memory which stores data for executing programs, and a microprocessor which executes programs to perform operations and commands.

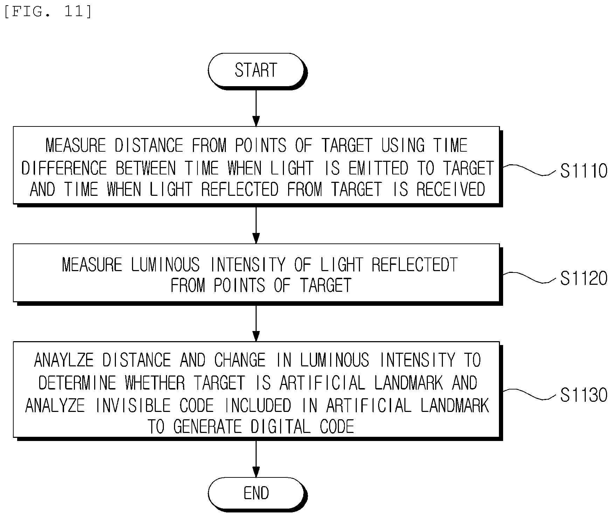

FIG. 11 is a flowchart illustrating an artificial landmark recognizing method according to another exemplary embodiment of the present disclosure. The artificial landmark recognizing method may be performed by a computing device and a description duplicated with a detailed description of an operation performed by the artificial landmark recognizing apparatus will be omitted.

In step S1110, a computing device measures a distance from points of a target using a time difference between a time when the light is emitted to the target and a time when the light reflected from the target is received.

In step S1120, the computing device measures a luminous intensity of light reflected from the points of the target.

In step S1130, the computing device determines whether the target is an artificial landmark by analyzing a distance from the points of the target and a change in the luminous intensity of the points of the target. In step S1130, the computing device analyzes an invisible barcode included in the artificial landmark to generate a digital code. The artificial landmark includes (i) a base and (ii) an invisible barcode which is connected to the base and has a code sequence which is formed of a material which reflects, absorbs, or emits light having a first wavelength band. The code sequence is hidden by a material which reflects, absorbs, or emits light having a second wavelength band and becomes invisible.

In step S1130, the computing device segments a candidate area where the luminous intensity of points of the target discontinuously changes. In step S1130, the computing device normalizes a luminous intensity with respect to the distance from the points of the target with respect to a predetermined reference distance. In step S1130, the computing device distinguishes the normalized luminous intensity by a bright area and a dark area to determine the bright area and the dark area of the candidate area is a code sequence. In step S1130, the computing device converts the code sequence into a binary code to extract identification information.

The artificial landmark recognizing method may further include a step of calculating a relative location of the artificial landmark.

In the step of calculating a relative location of the artificial landmark, the points of the artificial landmark are line-fitted. In the step of calculating a relative location of the artificial landmark, a relative angle between (i) a line virtually extending between line fitted points and the artificial landmark recognizing apparatus and (ii) a line virtually extending in a traveling direction is calculated. In the step of calculating a relative location of the artificial landmark, a relative distance between the line-fitted points and the artificial landmark recognizing apparatus is calculated and the relative location is calculated based on the relative angle and the relative distance.

In FIGS. 7, 9, and 11, the respective processes are sequentially performed, but this is merely illustrative and those skilled in the art may apply various modifications and changes by changing the order illustrated in FIGS. 7, 9, and 11 or performing one or more processes in parallel or adding another process without departing from the essential gist of the exemplary embodiment of the present disclosure.

The operation according to the exemplary embodiment of the present disclosure may be implemented as a program command which may be executed by various computers to be recorded in a computer readable medium. The computer readable medium indicates an arbitrary medium which participates to provide a command to a processor for execution. The computer readable medium may include solely a program command, a data file, and a data structure or a combination thereof. For example, the computer readable medium may include a magnetic medium, an optical recording medium, and a memory. The computer program may be distributed on a networked computer system so that the computer readable code may be stored and executed in a distributed manner. Functional programs, codes, and code segments for implementing the present embodiment may be easily inferred by programmers in the art to which this embodiment belongs.

## Claims

1. An artificial landmark recognizing apparatus (10), comprising:
an optical transceiver (100) which emits light to a target and receives light reflected from the target to convert the reflected light into an electrical signal;
a distance measuring unit (200) which measures a distance from points of the target using a difference between a time to emit light and a time to receive light;
a luminous intensity measuring unit (300) which measures a luminous intensity of light reflected from the points of the target; and
an artificial landmark detecting unit (400) which analyzes a change in the distance and the luminous intensity to determine whether the target is an artificial landmark and analyzes an invisible barcode included in the artificial landmark to generate a digital code, the artificial landmark comprising discontinuous stripes identifiable by the artificial landmark detecting unit (400),
wherein the artificial landmark detecting unit (400) determines whether the target is the artificial landmark by segmenting a candidate area where the luminous intensity of the points of the target discontinuously changes,
meaning that the distance from the points corresponding to the stripes of the artificial landmark is within a predetermined first range, a variation of the luminous intensity of the points exceeds a predetermined second range, some of the luminous intensities of the points are smaller than a minimum value and others are larger than a maximum value, and the others are smaller than the minimum value or larger than the maximum value, and wherein the candidate area has an area similar to the strip of the artificial landmark,
wherein the artificial landmark detecting unit (400) is configured to normalize a luminous intensity for the distance from the points of the target with respect to a predetermined reference distance, to distinguish the normalized luminous intensity by a bright area and a dark area to determine whether the bright area and the dark area of the candidate area is a code sequence, and to convert the code sequence into a binary code to extract identification information, and wherein the artificial landmark detecting unit (400) is furthermore configured to distinguish the bright area and the dark area using a moving average method which continuously calculates an average of two or more continuous data.

2. The artificial landmark recognizing apparatus (10) according to claim 1, wherein the artificial landmark includes (i) a base and (ii) the invisible barcode which is connected to the base and has a code sequence which is formed of a material which reflects, absorbs, or emits light having a first wavelength band and the code sequence is hidden by a material which reflects, absorbs, or emits light having a second wavelength band and becomes invisible.

3. The artificial landmark recognizing apparatus (10) according to claim 1, further comprising:
a location calculating unit (10) which calculates a relative location of the artificial landmark from the artificial landmark recognizing apparatus (10).

4. The artificial landmark recognizing apparatus (10) according to claim 3, wherein the location calculating unit (500) line-fits the points of the artificial landmark, calculates a relative angle between (i) a line virtually extending between the line-fitted points and the artificial landmark recognizing apparatus (10) and (ii) a line virtually extending in a traveling direction of the artificial landmark recognizing apparatus (10), calculates a relative distance between the line-fitted points and the artificial landmark recognizing apparatus (10), and calculates a relative location based on the relative angle and the relative distance.

5. A moving object (1), comprising:
an artificial landmark recognizing apparatus (10) which emits or receives light to a target to recognize an artificial landmark; and
a moving device (20) which is implemented to move the moving object (1) based on the distance to the target,
wherein the artificial landmark recognizing apparatus (10) includes:
an optical transceiver (100) which emits light to a target and receives light reflected from the target to convert the reflected light into an electrical signal;
a distance measuring unit (200) which measures a distance from points of the target using a difference between a time to emit light and a time to receive light;
a luminous intensity measuring unit (300) which measures a luminous intensity of light reflected from the points of the target; and
an artificial landmark detecting unit (400) which analyzes a change in the distance and the luminous intensity to determine whether the target is an artificial landmark and analyzes an invisible barcode included in the artificial landmark to generate a digital code, the artificial landmark comprising discontinuous stripes identifiable by the artificial landmark detecting unit (400),
wherein the artificial landmark detecting unit (400) determines whether the target is the artificial landmark by segmenting a candidate area where the luminous intensity of the points of the target discontinuously changes,
meaning that the distance from the points corresponding to the stripes of the artificial landmark is within a predetermined first range, a variation of the luminous intensity of the points exceeds a predetermined second range, some of the luminous intensities of the points are smaller than a minimum value and others are larger than a maximum value, and the others are smaller than the minimum value or larger than the maximum value, and wherein the candidate area has an area similar to a strip of the artificial landmark,
wherein the artificial landmark detecting unit (400) normalizes a luminous intensity for the distance from the points of the target with respect to a predetermined reference distance, distinguishes the normalized luminous intensity by a bright area and a dark area to determine whether the bright area and the dark area of the candidate area is a code sequence, and converts the code sequence into a binary code to extract identification information, and wherein the artificial landmark detecting unit (400) distinguishes the bright area and the dark area using a moving average method which continuously calculates an average of two or more continuous data.

6. The moving object (1) according to claim 5, wherein the artificial landmark recognizing apparatus (10) further includes:
a location calculating unit (500) which calculates a relative location of the artificial landmark from the artificial landmark recognizing apparatus (10).

## Patentansprüche

1. Künstlicher-Orientierungspunkt-Erkennungsvorrichtung (10), umfassend:
einen optischen Transceiver (100), der Licht zu einem Ziel aussendet und reflektiertes Licht von dem Ziel empfängt, um das reflektierte Licht in ein elektrisches Signal umzuwandeln;
eine Entfernungsmesseinheit (200), die eine Entfernung von Punkten des Zielobjekts unter Verwendung einer Differenz zwischen einer Zeit zum Aussenden von Licht und einer Zeit zum Empfangen von Licht misst;
eine Lichtstärkemesseinheit (300), die eine Lichtstärke von Licht misst, das von den Punkten des Zielobjekts reflektiert wird; und
eine Künstlicher-Orientierungspunkt-Detektionseinheit (400), die eine Änderung in der Entfernung und der Lichtstärke analysiert, um zu bestimmen, ob das Ziel ein künstlicher Orientierungspunkt ist, und einen unsichtbaren Strichcode analysiert, der in dem künstlichen Orientierungspunkt enthalten ist, um einen digitalen Code zu erzeugen, wobei der künstliche Orientierungspunkt diskontinuierliche Streifen umfasst, die durch die Künstlicher-Orientierungspunkt-Detektionseinheit (400) identifizierbar sind,
wobei die Künstlicher-Orientierungspunkt-Detektionseinheit (400) bestimmt, ob das Ziel der künstliche Orientierungspunkt ist, indem sie einen Kandidatenbereich segmentiert, in dem sich die Lichtstärke der Punkte des Ziels diskontinuierlich ändert,
was bedeutet, dass die Entfernung von den Punkten, die den Streifen des künstlichen Orientierungspunkts entsprechen, innerhalb eines vorbestimmten ersten Bereichs liegt, eine Variation der Lichtstärke der Punkte einen vorbestimmten zweiten Bereich überschreitet, einige der Lichtstärken der Punkte kleiner als ein Minimalwert und andere größer als ein Maximalwert sind und die anderen kleiner als der Minimalwert oder größer als der Maximalwert sind, und wobei der Kandidatenbereich einen Bereich aufweist, der dem Streifen des künstlichen Orientierungspunkts ähnlich ist,
wobei die Künstlicher-Orientierungspunkt-Detektionseinheit (400) eingerichtet ist, eine Lichtstärke für die Entfernung von den Punkten des Ziels in Bezug auf eine vorbestimmte Referenzentfernung zu normalisieren, um die normalisierte Lichtstärke durch einen hellen Bereich und einen dunklen Bereich zu unterscheiden und zu bestimmen, ob der helle Bereich und der dunkle Bereich des Kandidatenbereichs eine Codesequenz darstellen, und um die Codesequenz in einen Binärcode umzuwandeln, um Identifikationsinformationen zu extrahieren, und wobei die Künstlicher-Orientierungspunkt-Detektionseinheit (400) des Weiteren eingerichtet ist, den hellen Bereich und den dunklen Bereich unter Verwendung einer Methode des gleitenden Durchschnitts zu unterscheiden, die einen Durchschnitt von zwei oder mehr kontinuierlichen Daten kontinuierlich berechnet.

2. Künstlicher-Orientierungspunkt-Erkennungsvorrichtung (10) nach Anspruch 1, wobei der künstliche Orientierungspunkt (i) eine Basis und (ii) den unsichtbaren Strichcode umfasst, der mit der Basis verbunden ist und eine Codesequenz aufweist, die aus einem Material gebildet ist, das Licht mit einem ersten Wellenlängenband reflektiert, absorbiert oder aussendet, und die Codesequenz durch ein Material verborgen ist, das Licht mit einem zweiten Wellenlängenband reflektiert, absorbiert oder aussendet und unsichtbar wird.

3. Künstlicher-Orientierungspunkt-Erkennungsvorrichtung (10) nach Anspruch 1, ferner umfassend:
eine Ortsberechnungseinheit (10), die einen relativen Ort des künstlichen Orientierungspunkts von der Künstlicher-Orientierungspunkt-Erkennungsvorrichtung (10) berechnet.

4. Künstlicher-Orientierungspunkt-Erkennungsvorrichtung (10) nach Anspruch 3, wobei die Ortsberechnungseinheit (500) die Punkte des künstlichen Orientierungspunkts an eine Linie anpasst und einen relativen Winkel zwischen (i) einer Linie, die sich virtuell zwischen den linienangepassten Punkten und der Künstlicher-Orientierungspunkt-Erkennungsvorrichtung (10) erstreckt, und (ii) einer Linie, die sich virtuell in einer Bewegungsrichtung der Künstlicher-Orientierungspunkt-Erkennungsvorrichtung (10) erstreckt, berechnet, eine relative Entfernung zwischen den linienangepassten Punkten und der Künstlicher-Orientierungspunkt-Erkennungsvorrichtung (10) berechnet und basierend auf dem relativen Winkel und der relativen Entfernung einen relativen Ort berechnet.

5. Sich bewegendes Objekt (1), umfassend:
eine Künstlicher-Orientierungspunkt-Erkennungsvorrichtung (10), die Licht zu einem Ziel aussendet oder davon empfängt, um einen künstlichen Orientierungspunkt zu erkennen; und
eine Bewegungsvorrichtung (20), die derart implementiert ist, dass sie das sich bewegende Objekt (1) basierend auf der Entfernung zu dem Ziel bewegt,
wobei die Künstlicher-Orientierungspunkt-Erkennungsvorrichtung (10) umfasst:
einen optischen Transceiver (100), der Licht zu einem Ziel aussendet und reflektiertes Licht von dem Ziel empfängt, um das reflektierte Licht in ein elektrisches Signal umzuwandeln;
eine Entfernungsmesseinheit (200), die eine Entfernung von Punkten des Ziels unter Verwendung einer Differenz zwischen einer Zeit zum Aussenden von Licht und einer Zeit zum Empfangen von Licht misst;
eine Lichtstärkemesseinheit (300), die eine Lichtstärke von Licht misst, das von den Punkten des Ziels reflektiert wird; und
eine Künstlicher-Orientierungspunkt-Detektionseinheit (400), die eine Änderung in der Entfernung und der Lichtstärke analysiert, um zu bestimmen, ob das Ziel ein künstlicher Orientierungspunkt ist, und einen unsichtbaren Strichcode analysiert, der in dem künstlichen Orientierungspunkt enthalten ist, um einen digitalen Code zu erzeugen, wobei der künstliche Orientierungspunkt diskontinuierliche Streifen umfasst, die durch die Künstlicher-Orientierungspunkt-Detektionseinheit (400) identifizierbar sind,
wobei die Künstlicher-Orientierungspunkt-Detektionseinheit (400) bestimmt, ob das Ziel der künstliche Orientierungspunkt ist, indem sie einen Kandidatenbereich segmentiert, in dem sich die Lichtstärke der Punkte des Ziels diskontinuierlich ändert,
was bedeutet, dass die Entfernung von den Punkten, die den Streifen des künstlichen Orientierungspunkts entsprechen, innerhalb eines vorbestimmten ersten Bereichs liegt, eine Variation der Lichtstärke der Punkte einen vorbestimmten zweiten Bereich überschreitet, einige der Lichtstärken der Punkte kleiner als ein Minimalwert und andere größer als ein Maximalwert sind und die anderen kleiner als der Minimalwert oder größer als der Maximalwert sind, und wobei der Kandidatenbereich einen Bereich aufweist, der einem Streifen des künstlichen Orientierungspunkts ähnlich ist,
wobei die Künstlicher-Orientierungspunkt-Detektionseinheit (400) eine Lichtstärke für die Entfernung von den Punkten des Ziels in Bezug auf eine vorbestimmte Referenzentfernung normalisiert, die normalisierte Lichtstärke durch einen hellen Bereich und einen dunklen Bereich unterscheidet, um zu bestimmen, ob der helle Bereich und der dunkle Bereich des Kandidatenbereichs eine Codesequenz darstellen, und die Codesequenz in einen Binärcode umwandelt, um Identifikationsinformationen zu extrahieren, und wobei die Künstlicher-Orientierungspunkt-Detektionseinheit (400) den hellen Bereich und den dunklen Bereich unter Verwendung einer Methode des gleitenden Durchschnitts unterscheidet, die einen Durchschnitt von zwei oder mehr kontinuierlichen Daten kontinuierlich berechnet.

6. Sich bewegendes Objekt (1) nach Anspruch 5, wobei die Künstlicher-Orientierungspunkt-Erkennungsvorrichtung (10) ferner umfasst:
eine Ortsberechnungseinheit (500), die einen relativen Ort des künstlichen Orientierungspunkts von der Künstlicher-Orientierungspunkt-Erkennungsvorrichtung (10) berechnet.

## Revendications

1. Appareil de reconnaissance de points de repère artificiels (10) comprenant :
un émetteur-récepteur optique (100) qui émet de la lumière vers une cible et reçoit la lumière réfléchie par la cible pour convertir la lumière réfléchie en un signal électrique ;
une unité de mesure de distance (200) qui mesure une distance entre les points de la cible en utilisant une différence entre le temps d'émission et le temps de réception de la lumière ;
une unité de mesure d'intensité lumineuse (300) qui mesure l'intensité lumineuse de la lumière réfléchie par les points de la cible ; et
une unité de détection de point de repère artificiel (400) qui analyse une variation de distance et d'intensité lumineuse afin de déterminer si la cible est un point de repère artificiel et analyse un code-barres invisible inclus dans le point de repère artificiel afin de générer un code numérique, le point de repère artificiel comprenant des bandes discontinues identifiables par l'unité de détection de point de repère artificiel (400),
dans lequel l'unité de détection de point de repère artificiel (400) détermine si la cible est le point de repère artificiel en segmentant une zone candidate où l'intensité lumineuse des points de la cible varie de manière discontinue, ce qui signifie que
la distance entre les points correspondant aux bandes du point de repère artificiel est comprise dans une première plage prédéterminée, une variation de l'intensité lumineuse des points dépasse une deuxième plage prédéterminée, certaines intensités lumineuses des points sont inférieures à une valeur minimale et d'autres sont supérieures à une valeur maximale et les autres sont inférieures à la valeur minimale ou supérieures à la valeur maximale, et dans lequel la zone candidate a une surface similaire à la bande du point de repère artificiel,
dans lequel l'unité de détection de repère artificiel (400) est configurée pour normaliser une intensité lumineuse en fonction de la distance entre les points de la cible et par rapport à une distance de référence prédéterminée, pour distinguer l'intensité lumineuse normalisée par une zone claire et une zone sombre afin de déterminer si la zone claire et la zone sombre de la zone candidate constituent une séquence de code et pour convertir la séquence de code en un code binaire afin d'extraire des informations d'identification et dans lequel l'unité de détection de repère artificiel (400) est en outre configurée pour distinguer la zone claire et la zone sombre à l'aide d'une méthode de moyenne mobile qui calcule en continu une moyenne de deux ou plusieurs données continues.

2. Appareil de reconnaissance de point de repère artificiel (10) selon la revendication 1, dans lequel le point de repère artificiel comprend (i) une base et (ii) un code-barres invisible qui est relié à la base et possède une séquence de code qui est formée d'un matériau qui réfléchit, absorbe ou émet de la lumière ayant une première bande de longueur d'onde et la séquence de code est masquée par un matériau qui réfléchit, absorbe ou émet de la lumière ayant une deuxième bande de longueur d'onde et devient invisible.

3. Appareil de reconnaissance de point de repère artificiel (10) selon la revendication 1, comprenant en outre :
une unité de calcul de localisation (10) qui calcule une localisation relative du point de repère artificiel à partir de l'appareil de reconnaissance de point de repère artificiel (10).

4. Appareil de reconnaissance de point de repère artificiel (10) selon la revendication 3, dans lequel l'unité de calcul de localisation (500) ajuste les points du point de repère artificiel, calcule un angle relatif entre (i) une ligne s'étendant virtuellement entre les points ajustés et l'appareil de reconnaissance de point de repère artificiel (10) et (ii) une ligne s'étendant virtuellement dans une direction de déplacement de l'appareil de reconnaissance de point de repère artificiel (10), calcule une distance relative entre les points ajustés et l'appareil de reconnaissance de point de repère artificiel (10) et calcule une position relative en fonction de l'angle relatif et de la distance relative.

5. Objet mobile (1) comprenant :
un appareil de reconnaissance de point de repère artificiel (10) qui émet ou reçoit de la lumière vers une cible pour reconnaître un point de repère artificiel ; et
un dispositif mobile (20) qui est implémenté pour déplacer l'objet mobile (1) sur la base de la distance par rapport à la cible,
dans lequel l'appareil de reconnaissance de point de repère artificiel (10) comprend :
un émetteur-récepteur optique (100) qui émet de la lumière vers une cible et reçoit la lumière la lumière réfléchie en signal électrique ;
une unité de mesure de distance (200) qui mesure une distance entre des points de la cible en utilisant une différence entre un temps d'émission et un temps de réception de la lumière ;
une unité de mesure d'intensité lumineuse (300) qui mesure une intensité lumineuse de la lumière réfléchie entre les points de la cible ; et
une unité de détection de point de repère artificiel (400) qui analyse une variation de distance et d'intensité lumineuse afin de déterminer si la cible est un point de repère artificiel et analyse un code-barres invisible inclus dans le point de repère artificiel afin de générer un code numérique, le point de repère artificiel comprenant des bandes discontinues identifiables par l'unité de détection de point de repère artificiel (400),
dans lequel l'unité de détection de point de repère artificiel (400) détermine si la cible est le point de repère artificiel en segmentant une zone candidate où l'intensité lumineuse des points de la cible varie de manière discontinue, ce qui signifie que
la distance entre les points correspondant aux bandes du point de repère artificiel est comprise dans une première plage prédéterminée, une variation de l'intensité lumineuse des points dépasse une deuxième plage prédéterminée, certaines intensités lumineuses des points sont inférieures à une valeur minimale et d'autres sont supérieures à une valeur maximale et les autres sont inférieures à la valeur minimale ou supérieures à la valeur maximale, et dans lequel la zone candidate a une surface similaire à la bande du point de repère artificiel,
dans lequel l'unité de détection de repère artificiel (400) normalise une intensité lumineuse en fonction de la distance entre les points de la cible et par rapport à une distance de référence prédéterminée, distingue l'intensité lumineuse normalisée par une zone claire et une zone sombre afin de déterminer si la zone claire et la zone sombre de la zone candidate constituent une séquence de code et convertit la séquence de code en un code binaire afin d'extraire des informations d'identification et dans lequel l'unité de détection de repère artificiel (400) distingue la zone claire et la zone sombre à l'aide d'une méthode de moyenne mobile qui calcule en continu une moyenne de deux ou plusieurs données continues.

6. Objet mobile (1) selon la revendication 5, dans lequel l'appareil de reconnaissance de point de repère artificiel (10) comprend en outre :
une unité de calcul de localisation (500) qui calcule une position relative du point de repère artificiel à partir de l'appareil de reconnaissance de point de repère artificiel (10).
